# FASCICULE DE BREVET EUROPEEN

(11) **EP 1 228 962 B1**
(45) Date de publication et mention de la délivrance du brevet: **15.10.2003**
(21) Numéro de dépôt: 02290256.3
(22) Date de dépôt: 04.02.2002
(51) Int. Cl.: B64D 11/06, B60N 2/68, B60N 2/70, A47C 7/22, B60N 2/58, A47C 7/40, A47C 31/10

(54) **Element de siege d'avion avec toile de recouvrement et procede de montage dudit element**
Element eines Flugzeugsitzes mit Bezugstoff und Herstellungsverfahren eines solchen Elementes
Aircraft seat element with upholstery fabric and assembly method for said element

(30) Priorité: 05.02.2001 FR 0101505
(43) Date de publication de la demande: 07.08.2002
(73) Titulaire: Société Industrielle et Commerciale de Matériel Aéronautique, F-36100 Issoudun (FR)
(72) Inventeur: Marechal, Robert, 75116 Paris (FR); Mercier, Guy, 36100 Neuvy-Pailloux (FR); Barroca, Marcel, 36100 Brives (FR)
(74) Mandataire: Geismar, Thierry

(56) Documents cités:
- EP-A- 0 965 480
- WO-A-98/19879
- DE-A- 1 903 731
- DE-A- 3 229 857
- DE-A- 10 012 034
- GB-A- 2 167 291
- US-B1- 6 279 999

## Description

L'invention se rapporte à un élément de siège d'avion comportant une toile de recouvrement.

Les dossiers conventionnels existant pour des sièges d'avion comprennent une structure tubulaire avec un fond en tôle d'aluminium. Un coussin de dossier est positionné sur cette structure et l'ensemble est recouvert d'une housse.

Le poids d'un tel coussin peut varier entre 1 et 1,5 kg.

Le document DE-A-1 903 731 révèle un élément de siège comprenant les caractéristiques du préambule de la première revendication.

L'objet de l'invention est de réaliser un élément de siège d'avion allégé, sans coussin ni fond en tôle, qui permet d'assurer le confort du passager.

A cet effet, un premier objet de l'invention est un élément de siège comprenant :
- une armature rigide comportant deux montants latéraux sensiblement parallèles rigidement solidaires à l'une de leurs extrémités à une traverse, l'autre extrémité desdits montants étant fixée de façon articulée à un axe, ledit axe étant amovible,
- une toile tubulaire enfilée sur ladite armature et formant le fond d'un dossier et/ou d'une assise.

La toile utilisée est une toile élastique dont les fibres présentent des raideurs différentes suivant leur direction.

Dans un mode de réalisation, la toile utilisée est une toile à élasticité unidirectionnelle disposée de sorte que la direction des fibres élastiques de ladite toile soit horizontale, sensiblement perpendiculaire aux montants latéraux du dossier et/ou de l'assise.

La toile tubulaire peut être réalisée en un seul morceau de forme sensiblement rectangulaire, dont les bords latéraux sont assemblés par des moyens d'assemblage.

La toile tubulaire peut comporter deux morceaux de toile de forme sensiblement rectangulaire assemblés par leurs bords latéraux de façon à prendre la forme dudit élément de siège.

Les deux morceaux de toile peuvent être par exemple assemblés par couture.

Des moyens d'attache à l'axe d'articulation de l'élément de siège peuvent être prévus sur la partie inférieure de la toile tubulaire, de sorte que cette dernière est tendue verticalement sur ladite armature.

Dans un mode de réalisation, l'élément de siège comprend une housse doublée de mousse enfilée sur ladite toile tubulaire.

Le fond en tôle d'aluminium est ainsi remplacé par un fond en toile, tandis que le coussin de l'élément de siège est supprimé, ce qui permet de réduire le poids dudit élément et par conséquent le poids de l'équipement de l'avion.

Par ailleurs, la toile tubulaire permet de maintenir des formes évolutives confortables pour le passager. La toile est tendue à l'avant et à l'arrière de l'élément de siège, ce qui permet d'éviter que le passager du siège sente les coups de genoux du passager assis derrière lui.

Un deuxième objet de l'invention est un procédé de montage d'un élément de siège tel que décrit précédemment, comprenant les étapes consistant à :
- enfiler la toile tubulaire sur les montants de l'armature par les extrémités des montants opposées à la traverse, l'axe d'articulation dudit étant ôté, de sorte que lesdites extrémités opposées à la traverse desdits montants sont resserrées pour faciliter le passage de la toile tubulaire ;
- fixer l'axe d'articulation dudit élément de siège sur lesdites extrémités opposées à la traverse des montants afin d'écarter ces derniers et de tendre la toile tubulaire latéralement ;
- fixer la toile tubulaire sur l'axe d'articulation par des moyens d'attache de ladite toile afin de tendre la toile verticalement.

Dans un mode de réalisation, le procédé de montage comprend en outre les étapes consistant à :
- enfiler la housse doublée de mousse sur l'armature du par l'extrémité supérieure de celle-ci, la toile tubulaire étant en place ;
- fermer l'extrémité inférieure de ladite housse par lesdits moyens de fermeture de la housse.

D'autres objets et avantages apparaîtront au cours de la description suivante, en référence aux dessins annexés, donnés à titre d'exemples non limitatifs, dans lesquels :
- la figure 1 est une représentation schématique de l'armature d'un élément de siège, sans la toile tubulaire ;
- la figure 2 est une représentation schématique de l'armature de l'élément de siège recouvert de la toile tubulaire ;
- la figure 3 est une représentation schématique du montage de la housse sur l'armature de l'élément de siège avec la toile tubulaire ;
- les figures 4 et 5 sont des représentations schématiques du montage de la toile sur de l'armature de l'élément de siège ;
- la figure 6 est une représentation schématique d'un siège comprenant une assise et un dossier recouverts de toile.

L'élément de siège selon l'invention comprend :
- une armature rigide comportant deux montants latéraux sensiblement parallèles rigidement solidaires à l'une de leurs extrémités à une traverse, l'autre extrémité desdits montants étant fixée de façon articulée à un axe, ledit axe étant amovible,
- une toile tubulaire enfilée sur ladite armature et formant le fond dudit élément de siège.

Cet élément de siège peut être une structure de dossier ou d'assise d'un siège pour avion.

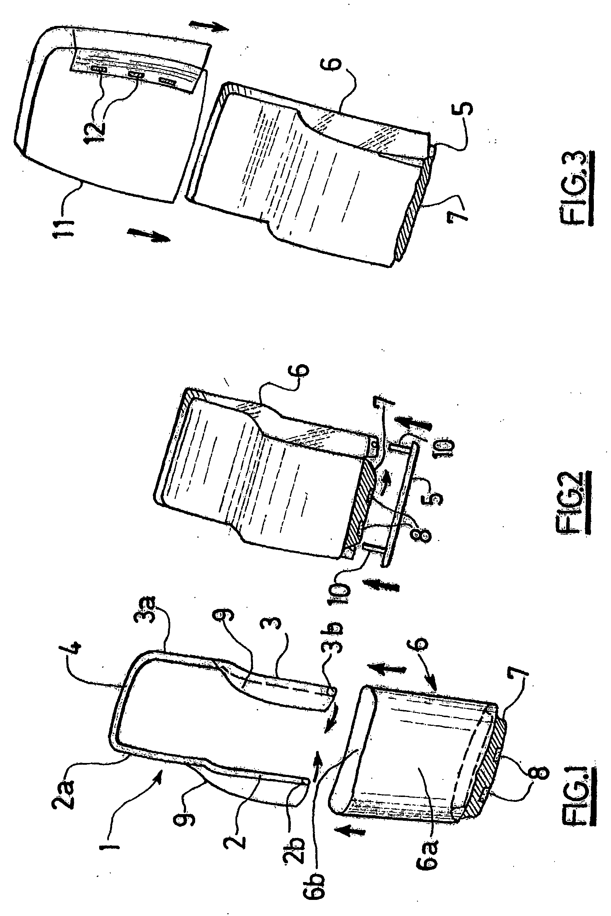

Dans la suite de la description, un élément de siège formant une structure de dossier est décrit en détail sur les figures 1 à 4.

Un élément de siège formant une structure d'assise est similaire à la structure du dossier et ne sera donc pas décrite plus en détail.

La toile utilisée est une toile élastique dont les fibres présentent des raideurs différentes suivant leur direction.

Dans un mode de réalisation, la toile utilisée est une toile à élasticité bidirectionnelle dont les fibres présentent des raideurs différentes suivant leur direction en fonction de la partie du corps à supporter.

Ainsi, lorsque que l'élément de siège est une structure de dossier, pour avoir une bonne répartition de pression du dos du passager sur le dossier, il est nécessaire que la toile s'ajuste à la forme de ce dernier verticalement et horizontalement.

La toile doit adopter alors sensiblement une forme concave en coupe horizontale, c'est à dire suivant les fibres sensiblement horizontales perpendiculaires aux montants latéraux, la concavité étant dirigé vers le dos du passager, et une forme sensiblement en S suivant une coupe verticale, c'est à dire suivant les fibres longitudinales. A cet effet, les raideurs des fibres de la toile sont différentes et varient selon la direction et la position des fibres.

Lorsque l'élément de siège est une structure d'assise, la toile doit adopter alors une forme concave dans les deux directions des fibres.

Dans un autre mode de réalisation, la toile utilisée est une toile à élasticité unidirectionnelle disposée de sorte que la direction des fibres élastiques de ladite toile soit horizontale, sensiblement perpendiculaire aux montants latéraux du dossier et/ou de l'assise.

En référence à la figure 1, la structure de dossier de siège est décrite.

Cette structure comprend une armature rigide 1 comportant deux montants 2, 3 latéraux sensiblement verticaux rigidement solidaires à leur extrémité supérieure 2a, 3a, à une traverse 4.

Ces montants 2, 3 sont sensiblement parallèles entre eux.

Les montants 2, 3 et la traverse 4 peuvent être d'une seule pièce ou de plusieurs pièces fixées entre elles par des moyens adéquats, par exemple par des vis, par soudure, ou tout autre moyen équivalent.

Les montants 2 , 3 et la traverse 4 peuvent être des pièces pleines ou tubulaires en un matériau suffisamment rigide pour ne pas se déformer à l'usage et répondre aux critères de sécurité requis pour les sièges d'avion.

Les extrémités inférieures 2b, 3b, desdits montants 2, 3 sont fixées de façon articulée à un axe 5, ledit axe étant amovible (figure 2).

L'axe 5 est par exemple fixé sur les montants 2, 3 au moyen de vis.

La structure de dossier comprend une toile tubulaire 6 enfilée sur ladite armature 1 afin de former le fond dudit dossier.

Dans le mode de réalisation représenté, la toile 6 utilisée est une toile à élasticité unidirectionnelle disposée de sorte que la direction des fibres élastiques de ladite toile soit horizontale, c'est-à-dire sensiblement perpendiculaire aux montants latéraux 2, 3.

La toile tubulaire 6 pourra ainsi s'adapter à la morphologie du passager pour assurer son confort.

En référence à la figure 1, la toile tubulaire 6 comporte deux morceaux 6a, 6b de toile de forme sensiblement rectangulaire assemblés par leurs bords latéraux de façon à prendre la forme du dossier.

L'un des morceaux de toile 6a, 6b est par exemple dirigé vers le passager, l'autre morceau de toile étant dirigé vers le siège situé derrière le passager.

Dans le mode de réalisation représenté, les deux morceaux de toile 6a, 6b sont assemblés par couture.

On peut toutefois prévoir que l'assemblage est réalisé par des moyens réversibles tels que des bandes velcros, des fermetures éclair, des boutons, ou tout autre moyen similaire. La toile peut par ailleurs être en un seul morceau.

La toile 6 peut par exemple comporter un seul morceau sensiblement rectangulaire dont les bords latéraux sont assemblés par des moyens d'assemblage réversibles 13 tels que des bandes velcros, des fermetures éclair, des boutons, ou tout autre moyen similaire.

La toile 6 est alors disposée sur le dossier de telle sorte que les d'assemblage 13 soient disposés sur la surface du dossier qui n'est pas en contact avec le passager.

La toile tubulaire 6 comporte sur sa partie inférieure 7, située à proximité de l'axe 5 lorsque la toile 6 est placée sur l'armature 1, des moyens d'attache 8 à l'axe d'articulation 5 de la structure de dossier de sorte que ladite toile tubulaire est tendue verticalement sur ladite armature 1.

Les moyens d'attache 8 peuvent être réversibles tels que des bandes velcros, des fermetures éclair, des boutons, ou tout autre moyen similaire.

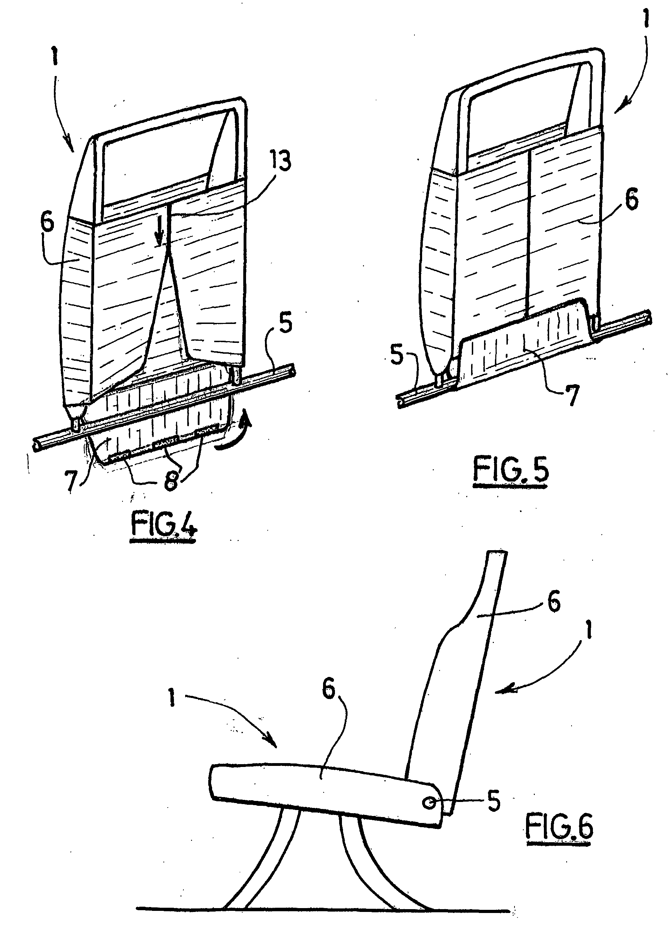

Une fois mise en place sur l'armature 1, la toile 6 prend donc la forme de cette dernière (figures 2 et 5).

Une armature 1 sensiblement identique peut être utilisée pour formée l'assise d'un siège. Ce dernier comprend alors deux armatures 1 disposées dans deux plans inclinés l'un par rapport à l'autre, tel que représenté figure 5.

Dans une variante, afin d'améliorer le confort du passager, on peut prévoir des profilés 9 fixés sur les montants 2, 3 d'une armature 1 pour dossier. Ces profilés 9 présentent par exemple une partie sensiblement plane longitudinale rendue solidaire du montant 2, 3, de l'armature et saillant sensiblement perpendiculairement au plan formé par l'armature 1 dans la direction de l'assise du siège.

La partie saillante de chaque profilé 9 est plus importante vers la partie inférieure de l'armature afin d'assurer un meilleur soutient du dos du passager.

Dans le mode de réalisation représenté, l'axe 5 d'articulation est fixé par visserie sur les extrémités inférieures des montants de ladite armature.

On peut toutefois prévoir d'autres moyens de fixation tel que par rivetage ou similaire.

L'armature 1 représentée sur les figures est tubulaire, et l'axe 5 présente deux bras radiaux 10 venant s'insérer dans les parties inférieures 2b, 3b des montants. Une fois insérés, les bras 10 sont rendus solidaires par visserie ou similaire des montants 2, 3.

Afin d'habiller la structure du dossier et/ ou de l'assise et d'améliorer le confort du passager, ladite structure comprend une housse 11 qui peut être par exemple doublée de mousse et qui est enfilée sur ladite toile tubulaire 6.

Ladite housse peut notamment comprendre des moyens de fermeture 12 assurant son maintien sur la structure de siège et permettant de l'installer et de la retirer facilement pour son lavage ou son changement.

Ces moyens de fermeture sont par exemple des bandes velcros, des fermetures éclairs, des boutons, ou similaires.

Ces moyens de fermeture 12 peuvent par exemple être situés sur un côté et sur la partie inférieure de la housse 11, ou sur toute autre partie de la housse facilitant sa mise en place sur l'armature 1 et ne gênant pas le passager.

Le procédé de montage de la structure de dossier selon l'invention est maintenant décrit en référence aux figures 1 à 3, les flèches indiquant les directions de montages des éléments.

Ce procédé comprend les étapes consistant à :
- enfiler la toile tubulaire sur les montants 2, 3 de l'armature 1 par les extrémités des montants opposées à la traverse, l'axe 5 d'articulation étant ôté, de sorte que les extrémités opposées à la traverse desdits montants sont resserrées pour faciliter le passage de la toile tubulaire 6 (figure 1);
- fixer l'axe 5 d'articulation sur les extrémités opposées à la traverse des montants afin d'écarter ces derniers et tendre la toile tubulaire latéralement (figure 2);
- fixer la toile tubulaire sur l'axe d'articulation par des moyens d'attache de ladite toile afin de tendre la toile verticalement (figure 3).

La toile 6 assure ainsi le rôle de fond de dossier et/ou d'assise, la double épaisseur de toile protégeant le passager assis des coups donnés dans l'arrière du dossier.

Dans le cas où la toile comprend un seul morceau rectangulaire, le procédé comprend les étapes consistant à :
- placer la toile sur l'armature 1 et assembler les bords latéraux de la toile par les moyens d'assemblage 13 ;
- fixer la toile tubulaire sur l'axe d'articulation par des moyens d'attache 8 de ladite toile afin de tendre la toile verticalement (figure 5).

L'axe 5 d'articulation peut éventuellement être ôté avant l'assemblage de la toile par les moyens d'assemblage 13 afin de faciliter l'assemblage de la toile

Dans un mode de réalisation, en référence à la figure 3, le procédé comprend en outre les étapes consistant à :
- enfiler la housse doublée de mousse sur l'armature du dossier par l'extrémité supérieure de celle-ci, la toile tubulaire étant en place ;
- fermer ladite housse par lesdits moyens de fermeture de la housse.

L'invention ne se limite pas aux modes de réalisation décrits ci-dessus.

D'autres modes de réalisation peuvent être envisagés sans sortir du cadre de l'invention.

On peut notamment envisager de monter la toile tubulaire 6 par la partie supérieure du dossier, de même, la housse 11 peut être mise en place par un côté de la structure de siège.

La structure de dossier de siège peut par ailleurs comporter un appui tête, auquel cas, la toile tubulaire peut recouvrir la partie formant appui tête ou ne pas la recouvrir, la housse recouvrant par contre l'appui tête.

## Revendications

1. Elément de siège d'avion, comprenant :
- une armature (1) rigide comportant deux montants latéraux (2, 3) sensiblement parallèles rigidement solidaires à l'une de leur extrémité (2a, 3a) à une traverse (4), l'autre extrémité (2b, 3b) desdits montants étant fixée de façon articulée à un axe (5), ledit axe (5) étant amovible,
- une toile tubulaire (6) enfilée sur ladite armature (1 ) et formant le fond dudit élément de siège,
**caractérisé en ce que** la toile (6) utilisée est une toile élastique dont les fibres présentent des raideurs différentes suivant leur direction.

2. Elément de siège selon la revendication 1, **caractérisé en ce que** la toile (6) est une toile élastique unidirectionnelle disposée de sorte que la direction des fibres élastiques de ladite toile soit perpendiculaire aux montants latéraux (2, 3) dudit élément de siège.

3. Elément de siège selon l'une des revendications 1 à 2, **caractérisé en ce que** la toile (6) comporte deux morceaux de toile (6a, 6b) de forme sensiblement rectangulaire assemblés par leurs bords latéraux de façon à prendre la forme dudit élément.

4. Elément de siège selon la revendication 3, **caractérisé en ce que** les deux morceaux de toile (6a, 6b) sont assemblés par couture.

5. Elément de siège selon l'une des revendications 1 à 2, **caractérisé en ce que** la toile (6) comporte un seul morceau sensiblement rectangulaire dont les bords latéraux sont assemblés par des moyens d'assemblage (13).

6. Elément de siège selon l'une des revendications 1 à 5, **caractérisé en ce que** la toile tubulaire (6) comporte sur sa partie inférieure (7) des moyens d'attache (8) à l'axe d'articulation (5) dudit élément de sorte que ladite toile tubulaire (6) est tendue verticalement sur ladite armature (1 ).

7. Elément de siège selon l'une des revendications 1 à 6, **caractérisé en ce que** l'axe d'articulation (5) est fixé par visserie sur les extrémités inférieures (2b, 3b) des montants de ladite armature (1 ).

8. Elément de siège selon l'une des revendications 1 à 7, **caractérisé en ce qu'**elle comprend une housse (11 ) doublée de mousse enfilée sur ladite toile tubulaire (6).

9. Elément de siège selon la revendication 8, **caractérisé en ce que** ladite housse (11) comprend des moyens de fermeture (12).

10. Elément de siège selon l'une des revendication 1 à 9, **caractérisé en ce que** ledit élément de siège forme la structure du dossier ou de l'assise du siège.

11. Siège d'avion comprenant une assise et un dossier, **caractérisé en ce que** ledit dossier est formé par un élément de siège selon l'une quelconque des revendications 1 à 9 et **en ce que** ledit dossier comprend des profilés (9) fixés aux montants (2, 3) et saillant sensiblement perpendiculairement au plan formé par l'armature (1 ) dans la direction de l'assise du siège.

12. Siège d'avion selon la revendication 11, **caractérisé en ce que** la partie saillante de chaque profilé (9) est plus importante vers la partie inférieure de l'armature (1 ).

13. Procédé de montage de l'élément de siège selon l'une des revendications 1 à 4 et 6 à 10 lorsqu'elles dépendent de la revendication 3, **caractérisé en ce qu'**il comprend les étapes consistant à :
- enfiler la toile tubulaire (6) sur les montants (2, 3) de l'armature (1 ) par les extrémités (2a, 2b) des montants opposées à la traverse, l'axe d'articulation (5) dudit élément étant ôté, de sorte que les extrémités opposées à la traverse (2b, 3b) desdits montants sont resserrées pour faciliter le passage de la toile tubulaire (6) ;
- fixer l'axe d'articulation (5) dudit élément sur les extrémités opposées à la traverse (2b, 3b) des montants afin d'écarter ces derniers et tendre la toile tubulaire (6) latéralement ;
- fixer la toile tubulaire (6) sur l'axe d'articulation (5) par des moyens d'attache (8) de ladite toile afin de tendre la toile verticalement.

14. Procédé de montage de l'élément de siège selon l'une des revendications 1 à 2, 5 et 6 à 10 lorsqu'elles dépendent de la revendication 5, **caractérisé en ce qu'**il comprend les étapes consistant à :
- placer la toile sur l'armature 1 et assembler les bords latéraux de la toile par les moyens d'assemblage (13) ;
- fixer la toile tubulaire (6) sur l'axe d'articulation (5) par des moyens d'attache (8) de ladite toile afin de tendre la toile verticalement.

15. Procédé de montage selon les revendications 11 ou 12, **caractérisé en ce qu'**il comprend en outre les étapes consistant à :
- enfiler une housse (11 ) doublée de mousse sur l'armature (1 ) de l'élément de siège par l'extrémité de celle-ci du côté de la traverse, la toile tubulaire (6) étant en place ;
- fermer ladite housse (11 ) par lesdits moyens de fermeture (12) de la housse.

## Patentansprüche

1. Element eines Flugzeugsitzes, bestehend aus:
- einem festen Rahmen (1), bestehend aus zwei seitlichen Trägern (2, 3), welche zueinander parallel sind, und welche an einem ihrer beiden Enden (2a, 3a) fest mit einem Querträger (4) verbunden sind, wobei die andere Ende (2b, 3b) genannter Seitenträger beweglich mit einer Achse (5) verbunden ist, und wobei genannte Achse (5) abnehmbar ist,
- einem schlauchförmigen Leinen (6), welcher über genannten Rahmen (1) gezogen wird und somit den Rücken des genannten Sitzelementes bildet,
**dadurch gekennzeichnet, dass** das verwendete Leinen (6) aus einem elastischen Gewebe besteht, dessen Fasern je nach Richtung unterschiedliche Steifheit aufweisen.

2. Element eines Sitzes nach Anspruch 1, **dadurch gekennzeichnet, dass** es sich bei dem Leinen (6) um ein in eine Richtung dehnbares, elastisches Gewebe handelt, welches so angebracht wird, dass die elastischen Fasern des genannten Gewebes rechtwinklig zu den Seitenträgern (2, 3) des genannten Sitzelementes angeordnet sind.

3. Element eines Sitzes nach einem der Ansprüche 1 bis 2, **dadurch gekennzeichnet, dass** das Leinen (6) zwei rechteckige Stoffteile (6a, 6b) umfasst, welche an ihren Seitenrändern so miteinander verbunden sind, dass sie die Form des besagten Elementes annehmen.

4. Element eines Sitzes nach Anspruch 3, **dadurch gekennzeichnet, dass** die beiden Stoffteile (6a, 6b) durch Naht miteinander verbunden sind.

5. Element eines Sitzes nach einem der Ansprüche 1 bis 2, **dadurch gekennzeichnet, dass** das schlauchförmige Leinen (6) nur ein rechteckiges Stoffteil umfasst, dessen Seitenränder durch Verbindungsmittel (13) miteinander verbunden sind.

6. Element eines Sitzes nach einem der Ansprüche 1 bis 5, **dadurch gekennzeichnet, dass** das schlauchförmige Leinen (6) an seiner Unterseite (7) Mittel zur Befestigung (8) an der beweglichen Achse (5) des genannten Elementes umfasst, so dass das genannte schlauchförmige Leinen senkrecht über den genannten Rahmen (1) gespannt ist.

7. Element eines Sitzes nach einem der Ansprüche 1 bis 6, **dadurch gekennzeichnet, dass** die bewegliche Achse (5) mit den unteren Enden (2b, 3b) der Seitenträger des genannten Rahmens (1) verschraubt ist.

8. Element eines Sitzes nach einem der Ansprüche 1 bis 7, **dadurch gekennzeichnet, dass** der Sitz einen mit Schaumstoff gepolsterten Überzug (11) umfasst, welcher über das genannten schlauchförmigen Leinen (6) gezogen wird.

9. Element eines Sitzes nach Anspruch 8, **dadurch gekennzeichnet, dass** genannter Überzug (11) Schließmittel (12) umfasst.

10. Element eines Sitzes nach einem der Ansprüche 1 bis 9, **dadurch gekennzeichnet, dass** genanntes Sitzelement die Struktur der Rückenlehne oder der Sitzfläche des Sitzes bildet.

11. Flugzeugsitz bestehend aus einer Sitzfläche und einer Rücklehne, **dadurch gekennzeichnet, dass** die Rücklehne ist mit einem Element eines Flugzeugsitzes nach einem der Ansprüche 1 bis 9 und, dass die Rücklehne mit der Seitenträgern (2,3) verbundenen Profile (9) umfasst,die etwa im rechten Winkel zu der bei dem Rahmen in Richtung der Sitzfläche ausgebildeten Ebene vorspringen.

12. Flugzeugsitz nach Anspruch 11,**dadurch gekennzeichnet, dass** der vorspringende Teil jedes Profiles grösser in dem unterem Teil des Rahmens ist.

13. Montageverfahren für das Element eines Sitzes nach einem der Ansprüche 1 bis 4 und 6 bis 10 in Abhängigkeit von Anspruch 3, **dadurch gekennzeichnet, dass** es Verfahrensschritte umfasst,
- wobei das schlauchförmige Leinen (6) von den dem Querträger gegenüberliegenden Enden (2a, 2b) der Seitenträger her über die Seitenträger (2, 3) des Rahmens (1) gezogen wird, wobei die bewegliche Achse (5) des genannten Elementes abgenommen wird, so dass die dem Querträger gegenüberliegenden Enden (2b, 3b) der genannten Seitenträger zusammengedrückt werden können, um so das schlauchförmigen Leinen (6) leichter überziehen zu können;
- wobei die bewegliche Achse (5) des genannten Elementes an den dem Querträger gegenüberliegenden Enden (2b, 3b) der Seitenträger befestigt wird, um so die Enden der Seitenträger auseinander zu drücken und das schlauchförmigen Leinen (6) der Breite nach zu spannen;
- wobei das schlauchförmige Leinen (6) mit Hilfe von Befestigungsmitteln (8) des genannten Leinens an der beweglichen Achse (5) befestigt wird, um so das Leinen senkrecht zu spannen.

14. Montageverfahren für das Element eines Sitzes nach einem der Ansprüche 1 bis 2, 5 und 6 bis 10 in Abhängigkeit von Anspruch 5, **gekennzeichnet dadurch, dass** es Verfahrensschritte umfasst,
- wobei das Leinen über den Rahmen 1 gelegt wird, und die Seitenränder des Leinens mit Hilfe von Verbindungsmitteln (13) verbunden werden;
- wobei das schlauchförmige Leinen (6) mit Hilfe von Befestigungsmitteln (8) des genannten Leinens an der beweglichen Achse (5) befestigt wird, um so das Leinen senkrecht zu Spannen.

15. Montageverfahren nach Anspruch 13 oder 14, **dadurch gekennzeichnet, dass** es unter anderem Schritte umfasst,
- wobei ein mit Schaumstoff gepolsterter Überzug (11) von der Seite des Querträgers her über den Rahmen (1) des Sitzelementes gezogen wird, nachdem zuvor das schlauchförmige Leinen (6) angebracht wurde;
- wobei genannter Überzug (11) mittels der genannten Schließmittel (12) des Überzuges geschlossen wird.

## Claims

1. An aircraft seat component, comprising:
- a rigid frame (1 ) having two substantially parallel lateral uprights (2, 3) rigidly fixed at one of their ends (2a, 3a) to a cross-member (4), the other end (2b, 3b) of the said uprights being fixed in an articulated fashion to a shaft (5), the said shaft (5) being removable,
- a tubular cloth (6) slipped onto the said frame (1) and forming the back of the said seat component,
**characterised in that** the cloth (6) is an elastic cloth whose fibres have different stiffnesses according to their direction.

2. A seat component according to Claim 1, **characterised in that** the cloth (6) is a unidirectional elastic cloth disposed so that the direction of the elastic fibres of the said cloth is perpendicular to the lateral uprights (2, 3) of the said seat component.

3. A seat component according to one of Claims 1 to 2, **characterised in that** the cloth (6) includes two pieces of cloth (6a, 6b) with a substantially rectangular shape connected by their lateral edges so as to take the shape of the said component.

4. A seat component according to Claim 3, **characterised in that** the two pieces of cloth (6a, 6b) are connected by stitching.

5. A seat component according to one of Claims 1 to 2, **characterised in that** the cloth (6) comprises a single substantially rectangular piece, the lateral edges of which are connected by assembly means (13).

6. A seat component according to one of Claims 1 to 5, **characterised in that** the tubular cloth (6) has on its bottom part (7) means (8) of attachment to the articulation shaft (5) of the said component so that the said tubular cloth (6) is tensioned vertically on the said frame (1 ).

7. A seat component according to one of Claims 1 to 6, **characterised in that** the articulation shaft (5) is fixed by screws to the bottom ends (2b, 3b) of the uprights of the said frame (1 ).

8. A seat component according to one of Claims 1 to 7, **characterised in that** it comprises a foam lined cover (11 ) slipped on the said tubular cloth (6).

9. A seat component according to Claim 8, **characterised in that** the said cover (11 ) comprises closure means (12).

10. A seat component according to one of Claims 1 to 9, **characterised in that** the said seat component forms the structure of the backrest or squab of the seat.

11. An aircraft seat comprising a squab and a backrest, **characterised in that** said backrest is formed by an aircraft seat component according to one of the claims 1 to 9 and **in that** said backrest comprises profiles (9) fixed to the uprights (2, 3) and projecting substantially perpendicular to the plan formed by the frame (1 ) in the direction of the squab of the seat.

12. An aircraft seat according to claim 11, **characterised in that** the projecting part of each profile (9) is larger in the lower part of the frame (1 ).

13. A method of mounting the seat component according to one of Claims 1 to 4 and 6 to 10 when they depend on Claim 3, **characterised in that** it comprises the steps consisting of:
- slipping the tubular cloth (6) on the uprights (2, 3) of the frame (1 ) by the ends (2a, 2b) of the uprights opposite to the cross-member, the articulation shaft (5) of the said component being removed, so that the ends opposite to the cross-member (2b, 3b) of the said uprights are brought together in order to facilitate the passage of the tubular cloth (6);
- fixing the articulation shaft (5) of the said component on the ends opposite to the cross-member (2b, 3b) of the uprights in order to separate the latter and tension the tubular cloth (6) laterally;
- fixing the tubular cloth (6) on the articulation axis (5) by means (8) of attaching the said cloth in order to tension the cloth vertically.

14. A method of mounting the seat component according to one of Claims 1 to 2, 5 and 6 to 10 when they depend on Claim 5, **characterised in that** it comprises the steps consisting of:
- placing the cloth on the frame 1 and connecting the lateral edges of the cloth by the assembly means (13);
- fixing the tubular cloth (6) on the articulation shaft (5) by means (8) of attaching the said cloth in order to tension the cloth vertically.

15. A mounting method according to Claims 13 or 14, **characterised in that** it also comprises the steps consisting of:
- slipping a foam lined cover (11 ) onto the frame (1 ) of the seat component by the end thereof on the side of the cross-member, the tubular cloth (6) being in place;
- closing the said cover (11 ) by means of the said means (12) of closing the cover.
